Europäisches Patentamt

(19) European Patent Office

Office européen des brevets

(11) Publication number: **0 034 486**
**B1**

## (12) EUROPEAN PATENT SPECIFICATION

(45) Date of publication of patent specification: **08.02.84**

(51) Int. Cl.³: **F 16 L 35/00**

(21) Application number: **81300610.3**

(22) Date of filing: **13.02.81**

(54) **High-pressure hose with blow-out guard.**

(30) Priority: **15.02.80 US 121904**

(43) Date of publication of application:
**26.08.81 Bulletin 81/34**

(45) Publication of the grant of the patent:
**08.02.84 Bulletin 84/6**

(84) Designated Contracting States:
**DE FR GB**

(56) References cited:
**DE - A - 2 407 039**
**FR - A - 1 552 053**
**US - A - 3 791 415**
**US - A - 3 831 635**
**US - A - 4 106 428**
**US - E - 27 906**

(73) Proprietor: **IMPERIAL CLEVITE INC.**
**2250 Golf Road Suite 200**
**Rolling Meadows Illinois 60008 (US)**

(72) Inventor: **Rider, Thomas F.**
**1618 Skyline Drive**
**Manitowoc Wisconsin 54220 (US)**

(74) Representative: **Milhench, Howard Leslie et al,**
**A.A. Thornton & Co. Northumberland House**
**303/306 High Holborn**
**London, WC1V 7LE (GB)**

## High pressure hose with blow-out guard

The present invention relates to a high pressure conduit provided with an end coupling and a blow-out guard assembly having a portion loosely surrounding and extending along the conduit from the end coupling the blow-out guard assembly not normally being loaded by fluid flow loading of the conduit but serving to prevent injury to an operator or nearby personnel if the conduit bursts.

It is known to transfer fluid under high pressure through flexible hoses. The pressure on the inside of such hoses may exceed 100 bar and so such hoses present a safety hazard to an operator or neaby personnel.

To avoid such possible injury, it is known from U.S. Patent 3,831,635 to provide a protective outer sleeve open at one end that fits loosely over the high pressure hose. The possibility still exists in this type of protection device for the fluid from a blow-out in the hose to pierce a hole in the protective outer sleeve and thereby pass through the sleeve and cause injury. Such devices require the protective sleeve to be of a length of the order of a metre to ensure that escaping fluid does not injure an operator. If personnel are standing at the opening of the protective sleeve they may still be injured by escaping effluent.

An object of the present invention is to provide a high pressure conduit such as a hose with an improved blow-out guard assembly which materially reduces the risk of injury to an operator if the conduit fails under high presure.

According to the present invention the blow-out guard assembly includes a sheath having a plurality of interstices therethrough so arranged that upon blow-out of the conduit within the sheath high pressure effluent from the conduit is dispersed into a low pressure and hence harmless flow by passage through the interstices of the sheath.

Thus, the present invention provides the conduit with a blow-out guard assembly wherein the sleeve does not define a solid wall for containing escaping effluent but instead defines a member for dispersing the effluent to reduce it to a safe pressure.

The sheath may comprise a plurality of fibers, filaments or wires that have been braided, spiral wrapped or knitted to form one or more layers. One end of the sheath may be attached by a ferrule to the end coupling and the other end may be covered by another ferrule to protect the operator from loose ends of the intermeshed filamentary material of the sheath. The sheath fits loosely around the conduit so as to be not normally loaded by the fluid pressure in the conduit. This, if the conduit fails, the sheath will not consequentially fail but instead acts as a dispersing member which breaks up the high pressure flow from the burst conduit, into a harmless fine spray.

In order that the invention may be more fully understood embodiments thereof will now be described by way of example with reference to the accompanying drawings wherein:

Figure 1 is a broken away view of a hose assembly provided with a blow out guard assembly, in accordance with the invention;

Figure 2 is a broken away view of the hose assembly but without the blow out guard assembly;

Figure 3 is a broken away view of the hose assembly and the blow out assembly shown partially assembled; and

Figure 4 is a view similar to Figure 1 showing an alternative form of the invention.

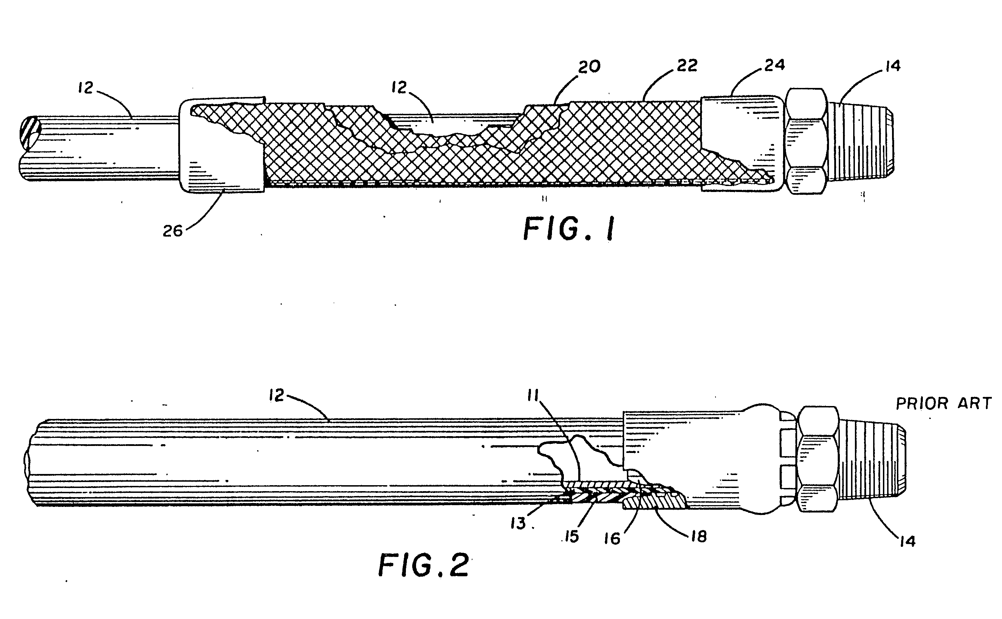

A high pressure conduit 12 which can be made out of a polymeric material, steel tubing, hydraulic hose or transport hose. An example of such a conduit in the form of a hose portion 12, is shown in detail in Fig. 2, and preferably consists of an inner core 11 with a reinforcing layer or layers 13 around it and an outer covering 15. A coupling 14 is fixedly attached to hose portion 12 in the known fashion. The coupling includes a stem 16 and a ferrule 18 which sandwich and grip the hose 12. The coupling end typically defines an input or a discharge end of the hose 12.

A first intermeshed sheath guard 20 circumferentially surrounds hose 12 such that it fits loosely over the hose. One end of sheath 20 is positioned directly over the coupling 14. A second sheath 22 circumferentially surrounds the first sheath 20 wherein the lengths of the two sheaths are preferably equal. Sheaths 20 and 22 are loosely braided, spiral wrapped or knitted such that interstices are left in the sleeve.

It has been determined that the interstitial spacing can vary from a minimum of 0.5% to a maximum of 20% with a preferable spacing between 1% to 8%. Since hose failures typically occur at the ends of the hose near the coupling, the length of the sheaths 20 and 22 need only cover a portion of the hose. The length of the sheaths, however, can equal the length of the hose 12, but preferably only cover the area adjacent the hose ends. The sheaths 20 and 22 are preferably made from wire but can also be made from fibers or filaments. In accordance with this invention, the sheaths can be braided, spiral wrapped or knitted into a tubular form leaving interstitial openings with the inner diameter of the sheath greater than the outer diameter of hose 12 such that the sheath can be sliped over the hose 12 prior to attaching hose coupling 14. Additionally, sheaths 20 and 22 are preferably flexible in order to not restrict movement of the hose.

As shown in Fig. 1, a ferrule 24 is attached at one end of the sheath gripping it to the coupling 14. Another ferrule 26 may be attached at the other end of the sheath in order to protect the operator from the end portions of the wire of the sheath. The length of the two ferrules 24 and 26 are such that a major portion of the sheath remains exposed. The ferrules 24 and 26 are preferably made from aluminum or steel although copper, brass and other standard metals could equally well be used.

If the hose 12 should burst along a portion covered by the guard 10, the guard does not try and retain the escaping effluents but instead disperses them and renders them harmless. As the escaping fluid, for example, passes through the interstices of the sheath, it is broken down into a plurality of paths of flow or streams. The escaping medium is thereby reduced to a dispersed effluent or a fine spray. The pressure within the hose will thus be reduced immediately since the effluents will continue to escape. The sheath also will retain any solid particles from the bursting hose.

In another embodiment of the present invention, the second sheath 22 would not be required for use in a low-pressure conduit if it is anticipated that the single sheath would provide sufficient strength to prevent rupture of the sheath when a conduit failure occurs.

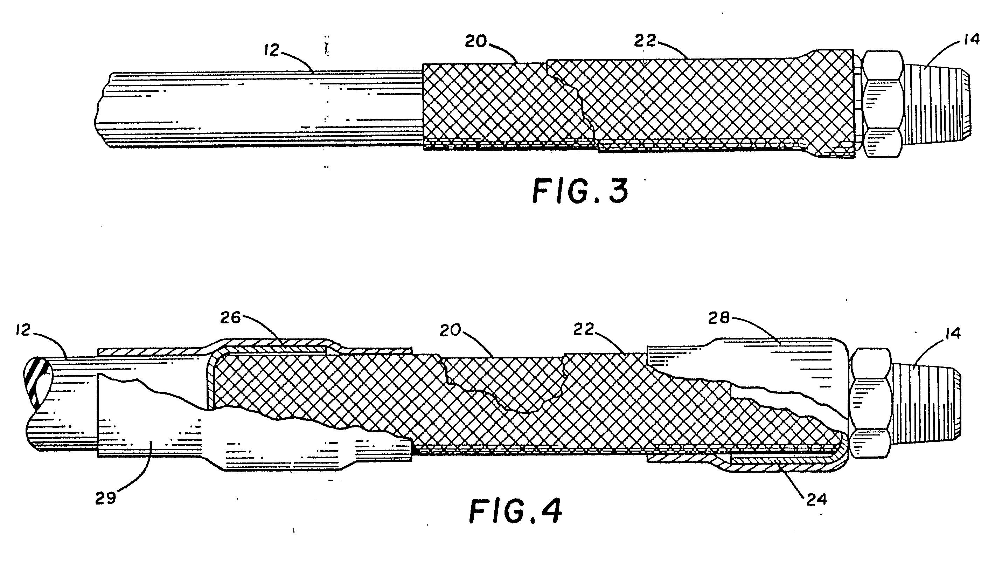

In yet another embodiment of the present invention, as shown in Fig. 4, shrinkable tubing 28 and 29 can be placed over ferrules 24 and 26 still leaving a major portion of the sheath exposed in order to better secure the ferrules to the hose 12. The type of tubing contemplated is a heat-shrinkable tubing that is known in the art.

This invention has been described with reference to preferred embodiments. Obvious modifications and alterations will occur to others upon reading and understanding of this specification. The intention is to include all such modifications and alterations insofar as they come within the scope of the appended claims.

### Claims

1. A high pressure conduit (12) provided with an end coupling (14) and a blow out guard assembly (20, 22, 24) having a portion loosely surrounding and extending along the conduit from the end coupling (14) the blow out guard assembly not normally being loaded by fluid flow loading of the conduit characterised in that the blow out guard assembly includes a sheath (20, 22) having a plurality of interstices therethrough so arranged that upon a blow out of the conduit (12) within the sheath (20, 22) high pressure effluent from the conduit is dispersed into a low pressure flow by passage through the interstices of the sheath.

2. A conduit arrangement in accordance with claim 1 including ferrules (24, 26) at opposite ends of the sheath and attaching the sheath to the conduit.

3. A conduit arrangement in accordance with claim 2 including shrinkable tubing (28, 29) covering said ferrules.

4. A conduit arrangement in accordance with any preceding claim including a second sheath overlying the first mentioned sheath.

5. A conduit arrangement according to claim 4 wherein said first mentioned sheath and said second sheath are made of wire.

6. A conduit arrangement according to claim 4 wherein said first mentioned sheath and said second sheath are made of fibers.

7. A conduit arrangement according to claim 4 wherein said at least one sheath and said second sheath are made of filaments.

8. A conduit arrangement according to any one of claims 4 to 7 wherein said first mentioned and said second sheath are each loosely braided, spiral wrapped or knitted.

### Revendications

1. Un conduit haute pression (12) muni d'un raccord d'extrémité (14) et d'un dispositif de sécurité contre la rupture ayant une partie entourant sans serrer et s'étendant le long de la conduite et à partir du raccord d'extrémité (14), l'ensemble de sécurité contre la rupture n'étant pas chargé en fonctionnement normal par la pression de l'écoulement du fluide dans la conduite caractérisé en ce que l'ensemble de sécurité contre la rupture comprend une gaine (20, 22) comportant une multitude d'interstices, agencés de telle sorte que lors d'une rupture de la conduite (12) à l'intérieur de la gaine (20, 22), l'effluent à haute pression sortant de la conduite est dispersé par passage à travers les interstices de la gaine en un flux à basse pression.

2. Agencement d'un conduit selon la revendication 1, comprenant des embouts (24, 26) aux extrémités opposées de la gaine fixant celle-ci au conduit.

3. Agencement d'un conduit selon la revendication 2 comprenant des tubes (28, 29) qui peuvent être sérrés recouvrant lesdits embouts.

4. Agencement d'un conduit selon l'une quelconque des revendications précédentes comprenant une seconde gaine recouvrant la première gaine citée.

5. Agencement d'un conduit selon la revendication 4 dans lequel la première gaine citée et la seconde gaine sont en fil métallique.

6. Agencement d'un conduit selon la revendication 4 dans lequel la première gaine citée et la seconde gaine sont en fibres.

7. Agencement d'un conduit selon la revendication 4 dans lequel l'une au moins desdites première et seconde gaines est de filaments.

8. Agencement d'un conduit selon l'une quelconque des revendications 4 à 7 dans lequel la première gaine citée et la seconde gaine sont toutes les deux tressées, enroulées en spirale ou tricotées, d'une manière lâche.

**Patentansprüche**

1. Eine Hochdruck-Rohrleitung (12) mit einem endständigen Kupplungsstück (14) und mit einer Berstschutzanordnung (20, 22, 24), von der ein sich vom Kupplungsstück (14) weg in Rohrleitungsrichtung erstreckender Abschnitt die Rohrleitung lose umgibt, wobei das durch die Rohrleitung strömende Medium unter üblichen Bedingungen die Berstschutzanordnung. nicht belastet, dadurch gekennzeichnet, daß die Berstschutzanordnung eine Ummantelung (20, 22) aufweist, die mit einer Vielzahl von Durchlässen oder Lücken versehen ist, so daß bei einem Bersten der Rohrleitung (12) innerhalb der Ummantelung (20, 22) das aus der Rohrleitung austretende Hochdruckmedium beim Durchtritt durch die Durchlässe oder Lücken zu einer Niederdruckströmung verteilt wird.

2. Eine Rohrleitungsanordnung nach Anspruch 1, die mit Einspannringen (24, 26) an gegenüberliegenden Enden der Ummantelung versehen ist, welche die Ummantelung an der Rohrleitung befestigen.

3. Eine Rohrleitungsanordnung nach Anspruch 2, die mit (einer) schrumpfbaren, die Einspannringe bedeckenden Hülle(n) (28, 29) versehen ist.

4. Eine Rohrleitungsanordnung nach einem der Ansprüche 1 bis 3, die mit einer zweiten Ummantelung versehen ist, welche die erste Ummantelung überdeckt.

5. Eine Rohrleitungsanordnung nach Anspruch 4, wobei die erste Ummantelung und die zweite Ummantelung aus Draht bestehen.

6. Eine Rohrleitungsanordnung nach Anspruch 4, wobei die erste Ummantelung und die zweite Ummantelung aus Fasern bestehen.

7. Eine Rohrleitungsanordnung nach Anspruch 4, wobei die erste Ummantelung und die zweite Ummantelung aus Fäden bzw. Filamenten bestehen.

8. Eine Rohrleitungsanordnung nach einem der Ansprüche 4 bis 7, wobei die erste Ummantelung und die zweite Ummantelung lose geflochten oder spiralförmig gewickelt oder gewirkt ausgebildet sind.

FIG. I

FIG. 2

PRIOR ART

1

FIG.3

FIG.4

0 034 486